# EUROPEAN PATENT SPECIFICATION

(11) **EP 2 276 808 B1**
(45) Date of publication and mention of the grant of the patent: **20.06.2018**
(21) Application number: 09746066.1
(22) Date of filing: 14.05.2009
(51) Int. Cl.: C08L 63/00, C08G 59/24, C08J 5/24

(54) **IMPROVED MOULDING PROCESSES**
VERBESSERTE FORMVERFAHREN
PROCÉDÉS DE MOULAGE AMÉLIORÉS

(30) Priority: 14.05.2008 GB 0808703
(43) Date of publication of application: 26.01.2011
(73) Proprietor: Hexcel Composites, Ltd., Duxford Cambridge CB2 4QB (GB)
(72) Inventor: PATEL, Neal, Milton Cambridge CB24 6YX (GB); MORTIMER, Steve, St. Ives Cambridgeshire PE27 6SY (GB)
(74) Representative: Eddowes, Simon
(86) International application number: PCT/GB2009/001210
(87) International publication number: WO 2009/138749

(56) References cited:
- EP-A- 0 226 648
- EP-A- 0 415 790
- US-A1- 2008 081 170
- DATABASE CHEMABS CHEMICAL ABSTRACTS SERVICE, COLUMBUS, OHIO, US; 1997, GOTO. KAZUYA E.A.: "Epoxy resin compositions for matrix resins of crack-free fiber-reinforced composite materials" XP002545091
- DATABASE WPI Week 199241 Thomson Scientific, London, GB; AN 1992-335713 XP002545092 & JP 04 239536 A (ASAHI CHEM IND CO LTD) 27 August 1992 (1992-08-27)

## Description

The present invention relates to the use of naphthalene based epoxy resins to improve the toughness of composite materials produced in a liquid moulding process as described in the present claims. Liquid moulding processes such as liquid composite moulding (LCM) for manufacture of composite parts are known processes. Two such examples of moulding processes are Resin Transfer Moulding (RTM) or Liquid Resin Infusion (LRI). RTM involves the injection of a liquid resin into a dry fibre perform. A formulated resin is typically injected under pressure into to a closed mould which contains a fibre preform. The resin is then cured and the mould can be opened to remove the finished fibre-resin assembly.
The LRI process uses a mould that has a flexible membrane as the upper tooling surface. The liquid resin is drawn into the 'mould' by applying vacuum and passes rapidly over the surface of the fibre perform by means of a layer of highly porous 'flow media'. The resin is infused through the thickness of the perform, and then cured before demoulding of the finished fibre-resin assembly.

Typically a wide range of thermosetting resins may be used in liquid moulding process, including but not limited to epoxy, bismaleimide, cyanates, polyesters, and phenolics.

The advantages of liquid moulding processes in making composite materials include providing materials with good surface finish on both sides, good control of dimensional tolerances, low void content in the material, and ability to make uniform relatively complex structures.

However, composite materials produced by liquid moulding processes typically have a low level of toughness. Prior attempts to improve the toughness of the composite material have included adding tougheners to the liquid resin before it is injected in to the mould. The addition of high molecular mass thermoplastic toughening agents in the resin leads to an increase in viscosity. This increase in viscosity of the resin can make it difficult or even impossible to inject the resin in to the mould as the resin begins to cure before the preform is completely filled with resin.

An alternative has been to disperse thermoplastic or rubber toughening agents in the form of undissolved particles in the resin. However, unless the particles are very small (sub-micron) the particles are effectively filtered by the fibrous reinforcement which results in uneven distribution of the particles and localised concentrations of tougheners. In some cases this filtering effect may lead to complete blocking of the mould from further injection or infusion of the resin.

The use of sub-micron scale toughening particles has been explored, with typical aerospace matrix resins where a high glass transition temperature (*T*_{g}) is typically required (>140°C wet). These types of particles have been found to be ineffective in these high glass transition matrices.

The present invention therefore seeks to provide a resin system which may be toughened by addition of sub-micron toughening particles, and which may be used in liquid moulding processes to provide composite materials with improved toughness in comparison to prior attempts as described. The use of naphthalene-based epoxy resin compositions to improve the shrinkage of composites produced using a liquid moulding process i.e. resin transfer moulding. The present invention further seeks to provide a composite material and a method of making a composite material using a liquid moulding process, in which the composite material has improved toughness and viscosity by the use of a naphthalene -based epoxy resin composition as described in the present claims. According to a first aspect of the present invention there is provided the use of a naphthalene -based epoxy resin composition as described in the present claims for making a composite material in a liquid moulding process, wherein the resin system comprises;
an epoxy component: and
at least one curing agent;
wherein 35-90 wt% of the epoxy component is one or more naphthalene based as described in the present claims the present invention relates to a method of forming a cured composite material in a liquid moulding process comprising the steps of:
placing or forming a fibrous reinforcement in a mould;
injecting or infusing a resin system according to the first aspect in to the fibrous reinforcement; and
curing to form a cured composite material.
The present invention also relates a cured composite material according to the present claims. It has surprisingly been found that the use of a resin in which the epoxy component is made up of 35-90 wt % of a naphthalene based epoxy resin provides a resin system which is more toughenable when used in a liquid moulding process. The resin system of the present invention has a viscosity which is suitable for use in a liquid moulding process using injection or infusion without the disadvantages of prior resin systems as described herein.
The term "resin" as used in the present application, refers to mixtures of chain lengths of resins having varying chain lengths comprising any of monomers, dimers, trimers, or polymeric resin having chain length greater than 3. References to specific resins throughout the description are to monomer components which would be used to form the resulting resin unless otherwise specified.
The term 'naphthalene based epoxy resins' refers to epoxy resins having at least one naphthalene ring in its backbone. It will be understood that references to naphthalene based epoxy resins refers to those having a naphthalene ring with at least one epoxy group directly substituted thereupon. The naphthalene ring may comprise more than one epoxy group, with two or three epoxy groups being particularly suitable.

The naphthalene based epoxy resins are therefore formed from monomer units comprising a naphthalene ring with at least one epoxy group substituted thereupon.

The naphthalene based epoxy resins may be based on monomer units with more than one epoxy group and therefore di, tri, and tetrafunctional epoxy monomers may be selected in any combination.

Preferably, the monomer units comprise a naphthalene ring with two epoxy groups substituted thereupon, and therefore difunctional epoxy monomers are particularly preferred.

The epoxy groups may be bonded to the naphthalene ring at any suitable position in any suitable combination.

Suitable naphthalene based epoxy resins may include those derived from dihydroxynaphthalene, trihydroxynaphthalene, or terahydroxynaphthalene.

Naphthalene based epoxy resins derived from dihydroxynaphthalene are particularly preferred.

Specific dihyroxynaphthalene precursors which may be used for producing the naphthalene based epoxy resin, by way of example, include those based on 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 2,3-dihydroxynaphthalene, and 2,7-dihydroxynaphthalene.

Naphthalene based epoxy resins based on 1,6-dihydroxynaphthalene are preferred.

The naphthalene ring may also have non-epoxy substituents bonded at any of the non-epoxy substituted sites.

The non-epoxy substituted sites of the naphthalene ring may be substituted with any suitable non-epoxy substituents. Suitable non-epoxy substituent groups, by way of example, include hydrogen, hydroxyl, alkyl, alkenyl, alkynyl, alkoxyl, aryl, aryloxyl, aralkyloxyl, aralkyl, halo, nitro, or cyano radicals. The non epoxy substituent groups may be straight, branched, cyclic, or polycyclic substituents.

The non-epoxy substituents may be the same, or may be independently selected.

The naphthalene based epoxy resins may also be formed from monomer units which comprise more than one naphthalene ring within each monomer unit, and comprise at least one epoxy group directly bonded to at least one of the naphthalene rings.

Preferably, the monomer unit comprises two epoxy groups, wherein both epoxy groups may be bonded to the same naphthalene ring, or each of the epoxy groups may be bonded to different naphthalene rings.

In such an embodiment, each naphthalene ring structure may individually comprise one epoxy substituent to give a monomer unit which is difunctional overall. Other suitable examples would be where each naphthalene ring structure comprises two epoxy substituents to provide a monomer unit which is tetrafunctional overall.

Suitable naphthalene based epoxy resins having more than one naphthalene ring in the monomer unit may include those based on dihydroxy dinaphthalene, trihydroxy dinaphthalene, or tetrahydroxy dinaphthalene. Naphthalene based epoxy resins derived from dihydroxynaphthalene or tetrahydroxy dinaphthalene precursors are particularly preferred.

The monomer unit having two or more naphthalene rings would have the naphthalene rings bonded together with a bridging group. Suitable bridging groups include substituted and unsubstituted alkylene groups. Examples of non-substituted alkylene bridging groups include methyl, ethyl, n-propyl, iso-propyl, n-butyl, iso-butyl, tert-butyl, pentyl, pentyl, hexyl, and trimethyl. Examples of substituted alkylene bridging groups include 2,2-dimethyl-trimethylene, 2,2-diethyl-trimethylene, 2,2-dimethyl-tetramethylene, 2-methyl, 2-hydroxymethyl-trimethylene, and 2,2-di-hydroxymethyl-trimethylene.

Suitable naphthalene based epoxy resins having more than one naphthalene ring include those derived from naphthalenylalkyl naphthalene, where the alkyl bridging group may be any of the alkylene bridging groups detailed herein.

The epoxy functional groups on the dinaphthalene moiety may be present at any of the suitable binding sites in any combination. The epoxy functional groups may therefore be present at the 2, 3, 4, 5, 6, and 7 binding sites on any of the naphthalene rings present, and where there is more than one epoxy functional group these may be present in any suitable combination on any of the naphthalene rings.

The naphthalene epoxy resins having the epoxy functional groups at the 2 or/and 7 sites on one or both of the naphthalene rings are particularly preferred.

Specific di-naphthalene precursors which may be used for producing the naphthalene based epoxy resin having two naphthalene rings in each unit, by way of example, include those based on 1-(2-hydroxy-naphthalen-1-ylmethyl)-naphthalene-2-ol, 1-(2-hydroxy-naphthalen-1-ylmethyl)-naphthalene-2,7-diol, 1-(2-hydroxy-naphthalen-1-ylmethyl)-naplithalene-7-ol, 1-(7-hydroxy-naphthalen-1-ylmethyl)-naphthalene-7-ol, 1-(2,7-dihydroxy-naphthalen-1-ylmethyl)-naphthalene-2,7-diol, or any combination thereof.

Particularly preferred precursors for producing the naphthalene based epoxy resin are 1-(2-hydroxy-naphtlialen-1-ylmethyl)-naphtalene-2,7-diol, 1-(2-hydroxy-naphthalen-1-ylmethyl)-naphthalene-7-ol, and 1-(2,7-dihydroxy-naphthalen-1-ylmethyl)-naphthalene-2,7-diol, or any combination thereof.

These particularly preferred precursors are available commercially as HP4700, HP4750 and HP4770 (available from Danippon Ink & Chemicals of Japan).

The chemical structures of these monomer units in epoxy form are shown below for reference. 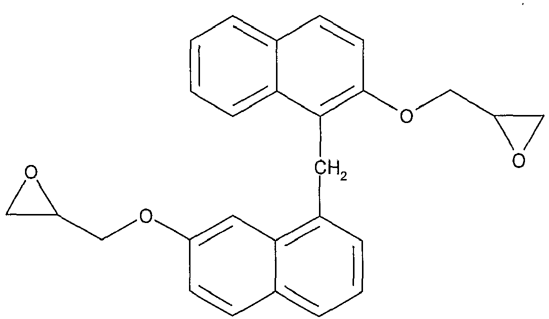 HP4770 - derived from 1-(2-hydroxy-naphthalen-1-ylmethyl)-naphthalene-7-ol 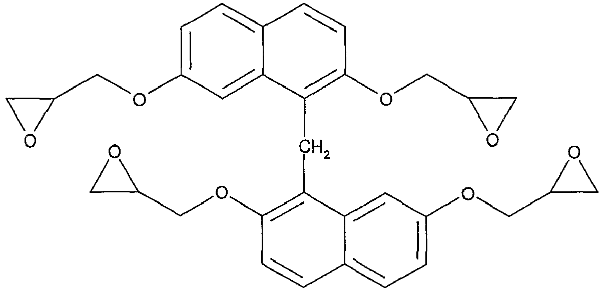 HP4700 - derived from 1-(2,7-dihydroxy-naphthalen-1-ylmethyl)-naphthalene-2,7-diol 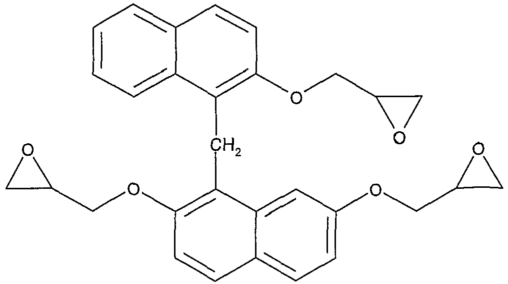 HP4750 - derived from on 1-(2-hydroxy-naphthalen-1-ylmethyl)-naphthalene-2,7-diol

Any of the above naphthalene based monomer precursors may be formed in to a glycidyl epoxy resin, such as glycidyl ethers epoxy resins. In particular, diglycidyl ethers of the precursors are preferred. The diglycidyl ethers of the precursors may be formed by reacting the precursor with epichlorohydrin in the presence of a basic catalyst.

An example of a preferred naphthalene based epoxy would be diglycidyl ether of 1,6-dihydroxynaphthalene (available commercially as Epiclon HP-4032 and HP-4032D from Dainippon Ink and Chemicals Incorporated of Japan).

The naphthalene based epoxy resins are present in the epoxy resin in an amount equal to or greater than 35 wt.% of the epoxy component. Preferably, the naphthalene epoxy resins are present in an amount equal to or greater than 40 wt.% of the epoxy component. More preferably, the naphthalene epoxy resins are present in an amount equal to or greater than 45 wt.% of the epoxy component.

The naphthalene based epoxy resins may be present in the epoxy resin in an amount less than or equal to 90 wt.% of the epoxy component. Preferably, the naphthalene epoxy resins are present in an amount less than or equal to 85 wt.% of the epoxy component. More preferably, the naphthalene epoxy resins are present in an amount less than or equal to 80 wt.% of the epoxy component.

It will be understood that references throughout the description to amounts of naphthalene based epoxy resins are expressed as a proportion of the epoxy component.

The balance of the epoxy component comprises epoxy resin selected from non-naphthalene based epoxy resins. It will be understood that these epoxy resins are derived from monomer units.

The epoxy resin may be any suitable epoxy resin.

Suitable epoxy resins may include those based on glycidyl epoxy, and non-glycidyl epoxy resins, alone or in combination. It will be understood that glycidyl epoxies are those prepared via a condensation reaction of appropriate dihydroxy compounds, dibasic acid or a diamine and epichlorohydrin. Non-glycidyl epoxies are typically formed by peroxidation of olefinic double bonds.

The glycidyl epoxy resins may be further selected from glycidyl-ether, glycidyl-ester and glycidyl-amine based resins.

The non-glycidyl epoxy resins may be selected from either aliphatic or cycloaliphatic epoxy resins.

Glycidyl ether epoxy resins are particularly preferred.

Suitable examples of epoxy resin include resins comprising at least one of bisphenol-A (BPA) diglycidyl ether and/or bisphenol-F (BPF) diglycidyl ether and derivatives thereof; tetraglycidyl derivatives of 4,4'-diaminodiphenylmethane (TGDDM); triglycidyl derivatives of aminophenols (TGAP), epoxy novolacs and derivatives thereof, other glycidyl ethers and glycidyl amines well known in the art, or any combination thereof.

Epoxy resins having two epoxy groups on the monomer unit from which the resin is derived are particularly preferred, and are typically termed difunctional epoxy resins. It will be understood that this would include any suitable epoxy resins having two epoxy functional groups.

Difunctional epoxy resins, by way of example, include those based on; diglycidyl ether of bisphenol F, bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, or any combination thereof.

The difunctional epoxy resin may be preferably selected from resins based on diglycidyl ether of Bisphenol F, diglycidyl ether of Bisphenol A, alone or in combination.

Most preferred is diglycidyl ether of Bisphenol F. Diglycidyl ether of Bisphenol F is available commercially from Huntsman Advanced Materials under the trade names Araldite GY281 and GY285.

The epoxy resin may be used alone or in any suitable combination with non-epoxy resins in the form of a resin system blend. Alternatively, the epoxy resin may be copolymerised with any suitable non-epoxy resin. Non-epoxy resins which may be used in either embodiment include, but are not limited to, those described herein.

The non-naphthalene epoxy resins may be present in the epoxy resin in an amount equal to or greater than 10 wt.%. Preferably, in an amount equal to or greater than 15 wt.%. More preferably, in an amount equal or greater than 20 wt.%.

The non-naphthalene epoxy resins may present in the epoxy resin in an amount less than or equal to 90 wt.%. Preferably, in an amount less than or equal to 85 wt.%. More preferably, in an amount less than or equal to 80 wt.%.

The resin system may comprise at least one further thermoset resin, wherein the further thermoset resin is not naphthalene based epoxy resins or non-naphthalene epoxy resin as described herein.

The resin system used in the liquid moulding process may comprise at least one further thermoset resin.

The further thermoset resins may be preferably selected from cyanate ester resins, vinyl ester resins, benzoxazine resins, bismaleimide resins, vinyl ester resins, phenolic resins, polyester resins, unsaturated polyester resins, cyanate ester resins, or any combination thereof.

The further thermoset resins may be present in any suitable amount.

Without wishing to be unduly bound by theory, it has been found that the benefits of the invention may be conferred due to the use of naphthalene based epoxy resins which provide relatively low cross-linked density of the resin system, whilst also having a high *T*_{g}.

Typically in order to achieve a resin matrix with a high *T*_{g}, the cured resin must be highly crosslinked. This is usually achieved by using a substantial amount of a multifunctional epoxy resin. However, such highly crosslinked resins are very difficult to toughen. The naphthalene epoxy resins provide a lower degree of crosslink density, and therefore toughening is possible. A high *T*_{g} is still obtained with this resin system due to the rigidity provided by the naphthalene backbone.

The resin system of the present invention therefore provides a cured composite material having these advantages using a liquid moulding process.

The resin system generally includes at least one curing agent. The curing agent may be present in the resin system or, for example, as a separate part to be added prior to injecting the resin system in to a mould for a liquid moulding process.

Suitable curing agents are those which facilitate the curing of the resin of the invention. It is envisaged that one curing agent may be used, or in an alternate embodiment a combination of two or more such curing agents may be used. Combinations of any curing agents described herein may be used.

Curing agents typically include cyanoguanidine, aromatic, aliphatic and alicyclic amines, acid anhydrides, Lewis Acids, substituted ureas and urones, imidazoles and hydrazines.

Exemplary preferred curing agents include aromatic, aliphatic, alicyclic amines, polyamidoamines, or any combination thereof.

Suitable curing agents may be selected from anhydrides, particularly polycarboxylic anhydrides, such as nadic anhydride (NA), methylnadic anhydride, phthalic anhydride, tetrahydrophthalic anhydride, hexahydrophthalic anhydride, methyltetrahydrophthalic anhydride, pyromellitic dianhydride, methylhexahydrophthalic anhydride, chloroendic anhydride, endomethylene tetrahydrophthalic anhydride, or trimellitic anhydride.

Further suitable curing agents are amines, including aromatic amines, e.g. 1,3-diaminobenzene, 1,4-diaminobenzene, 4,4'-diaminodiphenylmethane, benzenediamine (BDA); aliphatic amines such as ethylenediamine (EDA), m-xylylenediamine (mXDA), diethylenetriamine (DETA), triethylenetetramine (TETA), trioxatridecanediamine (TTDA), polyoxypropylene diamine, and further homologues, alicyclic amines such as diaminocyclohexane (DACH), isophoronediamine (IPDA), 4,4' diamino dicyclohexyl methane (PACM), bisaminopropylpiperazine (BAPP), N-aminoethylpiperazine (N-AEP), polyaminosulphones, such as 4,4'-diaminodiphenyl sulphone (4,4'-DDS), and 3,3'- diaminodiphenyl sulphone (3,3'-DDS) as well as polyamides, polyamines, amidoamines, polyamidoamines, polycycloaliphatic polyamines, polyetheramide, imidazoles, dicyandiamide.

In particular, more preferred curing agents include aromatic amines, e.g., 1,3-diaminobenzene, 1,4-diaminobenzene, 4,4'-diamino-diphenylmethane, 4,4'-methylenebis(2-ethylaniline); poly-aminosulphones such as 4,4'-diaminodiphenyl sulphone (4,4'-DDS), and 3,3'- diaminodiphenyl sulphone (3,3'-DDS); bis(4-amino-3-methyl-5isopropylphenyl) methane, diethyltoluenediamine, 1,3-propanediol bis(4-aminobenzoate); and fluorene derivatives such as bis(4-amino-phenyl)fluorene).

Curing agents selected from 4,4'-diaminodiphenyl sulphone (4,4'-DDS), and 3,3'-diaminodiphenyl sulphone (3,3'-DDS) are particularly preferred,

The curing agent is selected such that it provides curing of the resin system of the composite material when combined therewith at suitable temperatures. The amount of curing agent required to provide adequate curing of the resin system will vary depending upon a number of factors including the type of resin being cured, the desired curing temperature and curing time. The particular amount of curing agent required for each particular situation may be determined by well-established routine experimentation. The curing agent may be used either alone, or in any combination with one or more other curing agent.

The total amount of curing agent may be present in the range 1 wt.% to 60 wt.% of the resin system. More preferably, curing agent may be present in the range 2 wt.% to 50 wt.%. Most preferably, curing agent may be present in the range 10 wt.% to 35 wt.%.

The resin system and the composite material of the present invention may also include at least one additional ingredient such as performance enhancing or modifying agents. The performance enhancing or modifying agents, by way of example, may be selected from flexibilisers, toughening agents/particles, accelerators, core shell rubbers, flame retardants, wetting agents, pigments/dyes, flame retardants, plasticisers, UV absorbers, viscosity modifiers, stabilisers, inhibitors, or any combination thereof.

Toughening particles/agents may include, by way of example, any of the following, either alone or in combination: polyamides, copolyamides, polyimides, aramids, polylcetones, polyetheretherlcetones, polyarylene ethers, polyesters, polyurethanes, polysulphones, polyethersulphones, high performance hydrocarbon polymers, liquid crystal polymers, PTFE, elastomers, segmented elastomers such as reactive liquid rubbers based on homo or copolymers of acrylonitrile, butadiene, styrene, cyclopentadiene, acrylate, or polyurethane rubbers.

Toughening particles/agents may be selected from polyether sulphone (PES) or core shell rubber particles. Most preferred are core-shell rubber particles (CSR). Examples are Paraloid particles from Rohn and Hass or Kane-Ace particles from Kaneka, which are predispersed in a range of epoxy resins. Specific examples include MX136 and MX 411.

Toughening particles/agents, if present, may be present in the range 0.1 wt.% to 35 wt.% of the resin system. More preferably, the toughening particles/resin may be present in the range 2 wt.% to 25 wt.%. Most preferably, the toughening particles/resin may be present in the range 5 wt.% to 20 wt.%.

Suitable toughening particles/agents include, by way of example, Sumikaexcel 5003P, which is commercially available from Sumitomo Chemicals. Alternatives to 5003P are Solvay polysulphone 105P, and Solvay 104P, both commercially available from Solvay SA.

The toughening particles/agents may be in the form of particles having a diameter less than or equal to 5 microns. More preferably, less than or equal to 1 micron in diameter. The size of the toughening particles/agents may be selected such that they are not filtered by the fibre reinforcement.

The toughening particles/agents may have well defined geometries or may be irregular in shape. The term "diameter" used herein is understood to refer to the longest dimension of a three dimensional body. The term is applicable to toughening particles/agents of any shape and size as used herein.

It is to be understood that the term "liquid moulding process" relates to methods of obtaining cured composite materials using a mould. Such liquid moulding processes preferably refer to Liquid Composite Moulding in which the resin is injected in to the mould comprising the fibre preform, or to Resin Infusion Processes where the resin is infused and allowed to seep in to the fibre preform.

Injection of a resin system may be under pressure in to a dry preform, whilst infusion refers to infusion with liquid resin rather than resin film.

In particular, suitable liquid moulding processes to which the present invention may apply include resin transfer moulding (RTM), vacuum assisted resin transfer moulding (VARTM), Seeman composite resin infusion moulding process (SCRIMP), resin infusion under flexible tooling (RIFT), or liquid resin infusion (LRI).

The resin system of the present invention is particularly suitable for RTM and LRI processes.

The liquid moulding process used for processing the resin system includes the steps of placing a fibrous reinforcement in the mould, and injecting the resin system in to the mould. The contents of the mould would then be cured, and the cured composite material removed.

The liquid moulding process may use a two-sided mould set that forms both surfaces of the composite material. The lower side of the mould may be a rigid mould. The upper side may be a rigid or flexible mould.

Suitable flexible moulds include, by way of example, those made from composite materials, silicone, or extruded polymer films such as nylon.

The two sides of the mould may fit together to produce a mould cavity, with the fibrous reinforcement placed in the mould. The mould may then be closed prior to the introduction of the resin system.

The resin system may be introduced in to the mould using any suitable method. Suitable methods include, by way of example, vacuum infusion, resin infusion, and vacuum assisted resin transfer.

The introduction of the resin system in to the mould may be performed at ambient temperature (i.e. 25°C). Alternatively the introduction of the resin may be performed at elevated temperature.

The mould may be sealed after the resin system has been completely introduced.

The mould may then be subject to conditions as required in order to effect curing of the resin system therein.

The curing step of the liquid moulding process may result in a resin system of the present invention being fully or partially cured in the mould using any suitable temperature, pressure, and time conditions.

Infusion processes comprise a mould having a solid base (e.g. one made of metal) in to which a dry fibrous preform is placed. The resin system in the form of a liquid is placed on the top of the dry preform. The mould has a top face which is a flexible bag, and which allows flow of the resin in to the dry preform under pressure and therefore infusion in to the fibre.

A fibrous reinforcement is present in the liquid moulding process in order to form a composite material. The fibrous reinforcement may be selected from hybrid or mixed fibre systems which comprise synthetic or natural fibres, or a combination thereof.

The fibrous reinforcement may preferably be selected from any suitable material such as carbon fibre and graphite fibre or metallised glass, metallised carbon (e.g. nickel coated carbon fibre), metallised graphite, metallised polymer fibres (with continuous or discontinuous metal layers), the polymer of which may be soluble or insoluble in the polymeric resin. Any combination of these fibres may be selected. Mixtures of these fibres with non-electrically conducting fibres (such as fibreglass for example) may be used.

The fibrous reinforcement of the composite material may be selected from any fibrous material, including hybrid or mixed fibre systems which comprise synthetic or natural fibres, or a combination thereof. The fibrous reinforcement may preferably be selected from any suitable material such as fibreglass, carbon or aramid (aromatic polyamide) fibres.

The fibrous reinforcement may comprise cracked (i.e. stretch-broken) or selectively discontinuous fibres, or continuous fibres. It is envisaged that use of cracked or selectively discontinuous fibres may facilitate lay-up prior to being fully cured, and improve the capability of being shaped.

The fibrous reinforcement may be in a woven, non-crimped, non-woven, unidirectional, or multiaxial textile tapes or tows.

The woven form may be selected from a plain or satin form. Suitable fibre reinforcement preforms which may be used include 3D weaving, and dry fibre placement

The non-crimped and multiaxial forms may have a number of plies and fibre orientations.

Fibrous reinforcement suitable for the liquid moulding processes described herein are typically known as preforms in the field and comprise dry fibres which may be placed or laid down, prior to injection or infusion with resin, such that they take the shape of the mould used.

Such styles and forms are well known in the composite reinforcement field, and are commercially available from a number of companies, including Hexcel Reinforcements of Dagneux, France.

The resulting composite material of the liquid moulding process will be of a form comprising cured resin dispersed throughout the fibrous reinforcement. Any additional components which were present in the resin system when added to the mould will also be dispersed throughout the resulting composite material.

The improved composite materials of the present invention composites will find application in making articles such as numerous primary and secondary aerospace structures (wings, fuselage, bulkhead etc.), but will also be useful in many other high performance composite applications including automotive, rail and marine applications where high compressive strength, and resistance to impact damage are needed.

Thus, according to a fourth aspect of the present invention there is provided the use of a cured composite material of the third aspect for forming aerospace components.

All of the features described herein may be combined with any of the above aspects, in any combination.

In order that the present invention may be more readily understood, reference will now be made, by way of example, to the following description.

### Examples

It will be understood that all tests and physical properties listed have been determined at atmospheric pressure and room temperature (i.e. 20°C), unless otherwise stated herein, or unless otherwise stated in the referenced test methods and procedures.

The epoxy resins used in the following examples are as follows:
▪ Epiclon HP-4032 - epoxy resin derived from 1,6-dihydroxynaphthalne (Dainippon Ink and Chemicals Incorporated of Japan)
▪ Araldite GY285 - bi-functional bisphenol-F epoxy resin (Huntsman Advanced Materials of Duxford, UK)
▪ Araldite MY721 - tetraglycidyldiamino diphenylmethane epoxy resin (Huntsman Advanced Materials of Duxford, UK)
▪ MX136 - mixture of Araldite GY285 containing 25 wt.% core-shell toughening particles (Kaneka Belgium N.V. of Brussels, Belgium)
▪ MX411 - mixture of Araldite MY721 containing 25 wt.% core-shell toughening particles (Kaneka Belgium N.V. of Brussels, Belgium)
▪ MX156 - mixture of epoxy resin of bisphenol A (DER331 from Dow Chemicals) with epichlorohydrin, containing 25 wt.% core-shell toughening particles (Kaneka Belgium N.V. of Brussels, Belgium)
▪ Epikote 828 - medium viscosity liquid epoxy resin produced from bisphenol A and epichlorohydrin.

Additionally, references to 4,4'-DDS are to the curing agent 4,4'-diaminodiphenyl sulphone.

### Example 1 - Preparation of Reference Resin

A formulated epoxy resin was prepared based on bisphenol-F epoxy resin by mixing 470g of Araldite GY285 with 530g of MX136. The resins were mixed in a in a Molteni Planetary mixer at a temperature of 80°C. Once mixed, 320g of curing agent 4,4'-DDS was added, and the resulting mixture degassed under vacuum in the mixer.

The resulting mixture contained 66 wt.% of bisphenol-F epoxy resin, 10 wt.% of tougheners being core shell particles, and 34 wt.% curing agent.

### Examples 2 and 3 - Preparation of Further Reference Resins

Further reference resins were prepared in accordance with the method described for Example 1. The further reference resins are based on multifunctional epoxy resins.
Example 2 is a mixture of 430g MX411, 570g Araldite MY721, and 510g 4,4'-DDS. The mixture is based on tetraglycidyldiamino diphenylmethane epoxy resin, and once prepared has 59 wt.% epoxy resin, 7 wt.% core shell particle tougheners, and 34 wt.% 4,4'-DDS curing agent.
Example 3 is a mixture of 570g MX411, 430g Araldite GY285, and 400g 4,4'-DDS. The mixture is based on bisphenol-F and tetraglycidyldiamino diphenylmethane epoxy resins, and once prepared has 61 wt.% epoxy resin (made up of 31 wt.% bisphenol-F and 31 wt.% tetraglycidyldiamino diphenylmethane), 10 wt.% core shell particle tougheners, and 29 wt.% 4,4'-DDS curing agent.

### Examples 4 and 5 - Preparation of Reference Resins Comprising Naphthalene Based Epoxy Comparative

Further reference resins were prepared comprising naphthalene based epoxy resins in accordance with the method described for Example 1.

Example 4 is a mixture of 250g Epiclon HP-4032, 550g MX136, 200g Araldite GY285, and 340g 4,4'-DDS. The mixture is based on 1,6-dihydroxynaphthalene and bisphenol-F epoxy resins, and once prepared has 64 wt.% epoxy resin (made up of 19 wt.% 1,6-dihydroxynaphthalene and 45 wt.% bisphenol-F), 10 wt.% core shell particle tougheners, and 26 wt.% 4,4'-DDS curing agent. The naphthalene based epoxy resins are present at a level of 29.7 wt.% as a proportion of the total epoxy resin content.

Example 5 is a mixture of 189g Epiclon HP-4032, 416g MX156, 151g Epikote 828, and 242g 4,4'-DDS. The mixture is based on 1,6-dihydroxynaphthalene and bisphenol-A epoxy resins, and once prepared has 65 wt.% resin (made up of 19 wt.% 1,6-dihydroxynaphthalene and 46 wt.% bisphenol-A), 42 wt.% core shell particle tougheners, and 24 wt.% 4,4'-DDS curing agent. The naphthalene based epoxy resins are present at a level of 29 wt.% as a proportion of the total epoxy resin content.

### Example 6 - Preparation of Resin of the Present Invention

Formulated resin of the present invention was prepared in accordance with the method described for Example 1.

Example 6 is a mixture of 440g Epiclon HP-4032, 560g MX136, and 350g 4,4'-DDS. The mixture is based on 1,6-dihydroxynaphthalene and bisphenol-F epoxy resins, and once prepared has 64 wt.% epoxy resin (made up of 33 wt.% 1,6-dihydroxynaphthalne and 31 wt.% bisphenol-F), 10 wt.% core shell particle tougheners, and 26 wt.% 4,4'-DDS curing agent. The naphthalene based epoxy resins are present at a level of 51.6 wt.% as a proportion of the total epoxy resin content.

The composition of the resin systems of Examples 1 to 6 are summarised in Table 1 below.

**Table 1. Summary of composition of Examples 1 to 6**

| **Component** | **Example 1** | **Example 2** | **Example 3** | **Example 4** | **Example 5** | **Example 6** |
|---|---|---|---|---|---|---|
| Epiclon HP-4032 | 0 | 0 | 0 | 250g | 189g | 440g |
| MX136 | 530g | 0 | 0 | 550g | 0 | 560g |
| MX411 | 0 | 430g | 570g | 0 | 0 | 0 |
| MX156 | 0 | 0 | 0 | 0 | 416g | 0 |
| Araldite MY721 | 0 | 570g | 0 | 0 | 0 | 0 |
| GY285 | 470g | 0 | 430g | 200g | 0 | 0 |
| Epikote 828 | 0 | 0 | 0 | 0 | 151g | 0 |
| 4,4'-DDS | 320g | 510g | 400g | 340g | 242g | 350g |

### Preparation of Carbon-Fibre Composite Material by RTM

Composite material laminates were prepared from the resins described in Examples 1-6 using an RTM process. The process for making the composite materials is described below.

A 370gsm carbon-fibre fabric made from AS4 6K fibres in a 5-harness weave style (available from Hexcel Reinforcements of Dagneux, France) was cut in to 300 x 300 mm pieces. These were placed into an aluminium mould of thickness 4.2 mm with a lay up of [(+/-45°)/(0/90°)]3s. The mould was placed into a hydraulic press with heated platens at 120°C. The resins from Examples 1-6 were injected into the respective moulds, and once the injection was complete, the mould was heated to 180°C for a period of 2 hours to cure the composite laminate. After cooling to room temperature, the resultant composite laminate was demoulded.

The carbon fibre laminates produced were cut in to specimens and were subjected to a number of tests to determine physical properties. The methods for determining the physical properties of the laminates are described below.

### ▪ Compression After Impact (CAI)

The values of CAI obtained are designed to assess damage tolerance of composites. A 100 x 150 mm plate of composite material is cut and subject to an impact at a fixed energy. The compressive strength of this impacted plate is then tested. The strength of the plate is a measure of how much damage was introduced by the impact. A more damage resistant material (i.e. tougher material) will give higher compression strength. CAI for the specimens was determined by cutting and testing in accordance with 30J impact tests of test method AITM 1,0010 (Issue 2, June 1994).

### ▪ Glass Transition Temperature Wet/Dry (T_{g})

The glass transition temperature, *T*_{g}, is the temperature at which the resin system becomes brittle on cooling, or soft on heating. For the present invention and its applications it is advantageous to achieve composite materials having a higher *T*_{g}.

The glass transition temperature was determined by Dynamic Mechanical Analysis (DMA). The machine being used was the TA instruments DMA 2980 in the single cantilever mode on specimens of 10 x 4 mm cross-section.

The method used was a ramp rate from 25°C to 250°C at 5°C per minute. The TA Universal Analysis evaluation package was used to analyse the traces obtained and the *T*_{g} quoted was that of the extrapolated Onset from tangents drawn to the Log E' (storage modulus) curve.

Samples that were tested were those of Dry samples, (Dry samples are left at Room Temperature until tested) and Wet conditioned samples (Wet conditioned samples are those which are subjected to 72 hours (3 Days) in boiling water)

The results of the tests on the composite materials made from resin Examples 1-6 are shown in Table 2.

**Table 2. Physical properties determined for Examples 1 to 6 as shown in Table 1**

| **Property** | **Composite Material Made From Examples:** | | | | | | **Aerospace RTM 6** |
|---|---|---|---|---|---|---|---|
| | 1 | 2 | 3 | 4 | 5 | 6 | |
| CAI / MPa | 266 | 191 | 230 | 255 | 225 | 281 | 220 |
| *T*_{g} - dry (°C) | 146 | 267 | 198 | 174 | 188 | 195 | 205 |
| *T*_{g} - wet (°C) | 127 | 193 | 155 | 134 | 149 | 157 | 170 |

RTM6 comprises an untoughened composite material formed by RTM and using a resin mixture with multifunctional epoxy resins and aromatic amines. It is a commercially available material from Hexcel Composites, and is typically for RTM used for aerospace structures. It can be considered as state of the art.

The composite materials made with Example 1, 2, and 3 represent use of resin systems which are combinations of bisphenol F epoxy resin, tetra glycidyldiamino diphenylmethane epoxy resin, and core shell rubber tougheners. Example 1 (based on bisphenol F resin) gives a low wet *T*_{g} but high CAI. Example 2 (based on MY721 resin and typical of Aerospace formulations) gives a high *T*_{g} but low CAI. Example 3 (based on 50/50 MY721 and bisphenol F) has acceptable *T*_{g} (i.e. greater than Example 1) but poor CAI (lower than Example 1, and not improved over RTM6).

Therefore, these reference examples show that various combinations of epoxy resin and toughener typically do not provide composite materials having a combination of good toughness and damage resistance as required.

The composite materials made with resins of Examples 4 and 5 represent use of resin systems which do include low amounts of naphthalene based epoxy resins in combination with bisphenol A (Example 5) or bisphenol F (Examples 4). As can be seen from comparing Examples 1 and 4, the addition of naphthalene epoxy resins at low volumes provide no significant improvements in CAI or *T*_{g} values. Example 4 (based on 25/75 naphthalene epoxy and bisphenol F epoxy) has higher *T*_{g} than example 1 and higher CAI than example 2, demonstrating some improvement of using naphthalene epoxy. However, this improvement still does not provide better properties than non-naphthalene epoxy resins as can be seen in Example 3.
The composite material made with resin of Example 6 represents composite material of the present invention which comprises naphthalene based epoxy resins. Example 6 (based on 50/50 naphthalene epoxy and bisphenol F epoxy) gives both high *T*_{g} and high CAI.
It is to be understood that the invention is not to be limited to the details of the above embodiments, which are described by way of example only.

## Claims

1. Use of a naphthalene based epoxy resin based on one or more of dihydroxynaphthalene, trihydroxynaphthalene, or terahydroxynaphthalene in a resin system to improve the toughness of a cured composite material produced in a liquid moulding process using the resin system, wherein the resin system comprises an epoxy component and at least one curing agent, and wherein the naphthalene based epoxy resin is at least 35 wt.% and less than 90 wt % of the epoxy component.

2. Use of a naphthalene based epoxy resin according to claim 1, wherein the naphthalene based epoxy resin is based on monomer units having more than one epoxy group.

3. Use of a naphthalene based epoxy resin according to claim 1 or claim 2, wherein the naphthalene based epoxy resin is based on dihydroxynaphthalene.

4. Use of a naphthalene based epoxy resin according to claim 3, wherein the naphthalene based epoxy resin is based on 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 2,3 -dihydroxynaphthalene, 2, 7-dihydroxynaphthalene, or any combination thereof.

5. Use of a naphthalene based epoxy resin according to claim 4, wherein the naphthalene based epoxy resin is based on 1,6-dihydroxynaphthalene.

6. Use of a naphthalene based epoxy resin according to any preceding claim, wherein the naphthalene based epoxy resins are present in the epoxy resin in an amount equal to or greater than 40 wt.% of the epoxy component.

7. Use of a naphthalene based epoxy resin according to any preceding claim, wherein the epoxy component comprises non-naphthalene based epoxy resins based on glycidyl epoxy, or non-glycidyl epoxy, alone or in combination,

8. Use of a naphthalene based epoxy resin according to claim 7, wherein the non-naphthalene based epoxy resins are selected from resins based on bisphenol-A (BPA) diglycidyl ether andlor bisphenol-F (BPF) diglycidyl ether and derivatives thereof, tetraglycidyl derivatives of 4,4'-diaminodiphenylmethane (TGDDM), triglycidyl derivatives of aminophenols (TGAP), epoxy novolacs and derivatives thereof, glycidyl ethers or glycidyl amines, or any combination thereof.

9. Use of a naphthalene based epoxy resin according to either claim 7 or claim 8, wherein the non-naphthalene based epoxy resins are selected from resins based on diglycidyl ether of bisphenol F, diglycidyl ether of bisphenol A, alone or in combination.

10. Use of a naphthalene based epoxy resin according to any preceding claim, wherein the liquid moulding processes is resin transfer moulding (RTM), vacuum assisted resin transfer moulding (VARTM), Seeman composite resin infusion moulding process (SCRIMP), resin infusion under flexible tooling (RIFT), or liquid resin infusion (LRI).

11. Use of a naphthalene based epoxy resin according to any preceding claim, wherein the cured composite material is an aerospace component.

## Patentansprüche

1. Verwendung eines auf Naphthalin basierenden Epoxidharzes auf Basis von Dihydroxynaphthalin, Trihydroxynaphthalin und/oder Tetrahydroxynaphthalin in einem Harzsystem zur Verbesserung der Zähigkeit eines bei einem Flüssigformgebungsverfahren unter Verwendung des Harzsystems hergestellten gehärteten Verbundwerkstoffs, wobei das Harzsystem eine Epoxidkomponente und mindestens ein Härtungsmittel umfasst und wobei das auf Naphthalin basierende Epoxidharz mindestens 35 Gew.-% und weniger als 90 Gew.-% der Epoxidkomponente ausmacht.

2. Verwendung eines auf Naphthalin basierenden Epoxidharzes nach Anspruch 1, wobei das auf Naphthalin basierende Epoxidharz auf Monomereinheiten mit mehr als einer Epoxidgruppe basiert.

3. Verwendung eines auf Naphthalin basierenden Epoxidharzes nach Anspruch 1 oder Anspruch 2, wobei das auf Naphthalin basierende Epoxidharz auf Dihydroxynaphthalin basiert.

4. Verwendung eines auf Naphthalin basierenden Epoxidharzes nach Anspruch 3, wobei das auf Naphthalin basierende Epoxidharz auf 1,2-Dihydroxynaphthalin, 1,3-Dihydroxynaphthalin, 1,4-Dihydroxynaphthalin, 1,5-Dihydroxynaphthalin, 1,6-Dihydroxynaphthalin, 1,7-Dihydroxynaphthalin, 2,3-Dihydroxynaphthalin, 2,7-Dihydroxynaphthalin oder einer Kombination davon basiert.

5. Verwendung eines auf Naphthalin basierenden Epoxidharzes nach Anspruch 4, wobei das auf Naphthalin basierende Epoxidharz auf 1,6-Dihydroxynaphthalin basiert.

6. Verwendung eines auf Naphthalin basierenden Epoxidharzes nach einem der vorhergehenden Ansprüche, wobei die auf Naphthalin basierenden Epoxidharze in dem Epoxidharz in einer Menge gleich oder größer 40 Gew.-% der Epoxidkomponente vorliegen.

7. Verwendung eines auf Naphthalin basierenden Epoxidharzes nach einem der vorhergehenden Ansprüche, wobei die Epoxidkomponente nicht auf Naphthalin basierende Epoxidharze auf Basis von Glycidylepoxidharz oder Nichtglycidylepoxidharz alleine oder in Kombination umfasst.

8. Verwendung eines auf Naphthalin basierenden Epoxidharzes nach Anspruch 7, wobei die nicht auf Naphthalin basierenden Epoxidharze aus Harzen auf Basis von Bisphenol-A(BPA)-diglycidylether und/oder Bisphenol-F(BPF)-diglycidylether und Derivaten davon, Tetraglycidylderivaten von 4,4'-Diaminodiphenylmethan (TGDDM), Triglycidylderivaten von Aminophenolen (TGAP), Epoxy-Novolaken und Derivaten davon, Glycidylethern oder Glycidylaminen oder einer Kombination davon ausgewählt sind.

9. Verwendung eines auf Naphthalin basierenden Epoxidharzes nach Anspruch 7 oder Anspruch 8, wobei die nicht auf Naphthalin basierenden Epoxidharze aus Harzen auf Basis von Diglycidylether von Bisphenol F, Diglycidylether von Bisphenol A alleine oder in Kombination ausgewählt sind.

10. Verwendung eines auf Naphthalin basierenden Epoxidharzes nach einem der vorhergehenden Ansprüche, wobei es sich bei dem Flüssigformgebungsverfahren um RTM (Resin Transfer Moulding), VARTM (Vacuum Assisted Resin Transfer Moulding), SCRIMP (Seemann Composite Resin Infusion Moulding Process), RIFT (Resin Infusion under Flexible Tooling) oder LRI (Liquid Resin Infusion) handelt.

11. Verwendung eines auf Naphthalin basierenden Epoxidharzes nach einem der vorhergehenden Ansprüche, wobei es sich bei dem gehärteten Verbundwerkstoff um ein Luft- und Raumfahrtbauteil handelt.

## Revendications

1. Utilisation d'une résine époxy à base de naphtalène basée sur un ou plusieurs composés parmi le dihydroxynaphtalène, le trihydroxynaphtalène, et le tétrahydroxynaphtalène dans un système de résines pour améliorer la ténacité d'un matériau composite durci produit dans un procédé de moulage liquide utilisant le système de résines, le système de résines comprenant un composant époxy et au moins un durcisseur, et la résine époxy à base de naphtalène représentant au moins 35 % en poids et moins de 90 % en poids du composant époxy.

2. Utilisation d'une résine époxy à base de naphtalène selon la revendication 1, la résine époxy à base de naphtalène étant basée sur des motifs monomères ayant plus d'un groupe époxy.

3. Utilisation d'une résine époxy à base de naphtalène selon la revendication 1 ou la revendication 2, la résine époxy à base de naphtalène étant basée sur le dihydroxynaphtalène.

4. Utilisation d'une résine époxy à base de naphtalène selon la revendication 3, la résine époxy à base de naphtalène étant basée sur le 1,2-dihydroxynaphtalène, le 1,3-dihydroxynaphtalène, le 1,4-dihydroxynaphtalène, le 1,5-dihydroxynaphtalène, le 1,6-dihydroxynaphtalène, le 1,7-dihydroxynaphtalène, le 2,3-dihydroxynaphtalène, le 2,7-dihydroxynaphtalène, ou toute combinaison de ceux-ci.

5. Utilisation d'une résine époxy à base de naphtalène selon la revendication 4, la résine époxy à base de naphtalène étant basée sur le 1,6-dihydroxynaphtalène.

6. Utilisation d'une résine époxy à base de naphtalène selon une quelconque revendication précédente, les résines époxy à base de naphtalène étant présentes dans la résine époxy dans une quantité égale ou supérieure à 40 % en poids du composant époxy.

7. Utilisation d'une résine époxy à base de naphtalène selon une quelconque revendication précédente, le composant époxy comprenant des résines époxy non à base de naphtalène basées sur une résine époxy glycidylique, ou une résine époxy non glycidylique, seule ou combinée.

8. Utilisation d'une résine époxy à base de naphtalène selon la revendication 7, les résines époxy non à base de naphtalène étant choisies parmi des résines basées sur l'éther diglycidylique de bisphénol-A (BPA) et/ou l'éther diglycidylique de bisphénol-F (BPF) et leurs dérivés, les dérivés tétraglycidyliques de 4,4'-diaminodiphénylméthane (TGDDM), les dérivés triglycidyliques d'aminophénols (TGAP), les novolaques époxy et leurs dérivés, les éthers glycidyliques ou les amines glycidyliques, ou toute combinaison de ceux-ci.

9. Utilisation d'une résine époxy à base de naphtalène selon la revendication 7 ou la revendication 8, les résines époxy non à base de naphtalène étant choisies parmi des résines basées sur l'éther diglycidylique de bisphénol F, l'éther diglycidylique de bisphénol A, seules ou combinées.

10. Utilisation d'une résine époxy à base de naphtalène selon une quelconque revendication précédente, les procédés de moulage liquide étant un moulage par transfert de résine (RTM), un moulage par transfert de résine assisté par le vide (VARTM), un procédé de moulage de composites par infusion de résine Seeman (SCRIMP), une infusion de résine par outillage souple (RIFT), ou une infusion de résine liquide (LRI).

11. Utilisation d'une résine époxy à base de naphtalène selon une quelconque revendication précédente, le matériau composite durci étant un composant aérospatial.
